# EUROPEAN PATENT APPLICATION

(11) **EP 1 785 282 A2**
(43) Date of publication of application: **16.05.2007**
(21) Application number: 06255490.2
(22) Date of filing: 25.10.2006
(51) Int. Cl.: B42D 15/10, B41M 3/14

(54) **A personal authentication card and a method of manufacturing the same**

(30) Priority: 28.10.2005 JP 2005313853
(71) Applicant: IS Corporation, Tokyo (JP)
(72) Inventor: Hoshiyama, Yuichi, Sapporo City Hokkaido (JP)
(74) Representative: Stevens, Jason Paul

(57) **Abstract**

This invention relates to a personal authentication card for visual security checking and a method of manufacturing the same.

The card C comprises an upper and a lower transparent card support layer 12a, 12b, which sandwich an IC chip 14 and an antenna 16. There is a gradating printing layer 18 put on the upper transparent card support layer, which has a photograph image printing portion 18a (for sublimation heat transfer printing of an image 20). The image printing portion 18a is positioned so that it does not interfere with the IC chip 14 and the antenna 16. An ordinary printing layer 22 with a white matt portion 22a located at the photograph image printing portion 18a is provided on the lower transparent card support layer 12b, and a black printing layer 24 is provided integrally on the ordinary printing layer. A woven pattern hologram gradating layer is provided integrally on the ordinary printing layer.

Only the photographic image printing output portion of the personal authentication card is transparent. The face image is outputted by sublimation heat transfer printing and is engraved by watermarking from the back side to make the face image cloudy, and a visual checking both from the front and back sides and a right or wrong judgment of image can be carried out.

## Description

This invention relates to a personal authentication card for visual security checking and a method of manufacturing the same, and more particularly to a personal authentication card providing a high degree of visual checking security and a method of manufacturing the personal authentication card, wherein only a printed output portion of the face image of the personal authentication card is made of a transparent material, the face image is outputted by sublimation heat transfer printing, the same size image as the face image is engraved by an open-working from the back side to make the face image cloudy, and a visual checking both from the front and back sides and a right or wrong judgment of image can be carried out correctly, easily and at a low cost.

There have been proposed various personal authentication cards, each allowing a visual security check (for example, Japanese Patent Publication Nos. WO/31797/1995, 215288/1998, 03406/1999, 120295/1999, 348150/2000, 101305/2001, 312725/2002, 145477/2004 and 99915/2005).

Conventional credit cards are usually examined by checking a signature in the signature column on a back side of the credit card with the signature of the bearer of the credit card, or a registered password number of the bearer of the credit card is examined by checking the inputted password number in the host computer through a magnetic tape or a built-in type IC chip (either contact or non-contact type).

According to the conventional personal authentication card such as a member's card and an employee ID card, a face image photograph is outputted onto a vinyl chloride sheet (hereinafter referred to as a PVC sheet) by sublimation heat transfer printing, a contact type IC chip is built in the PVC sheet, or both of them are either used separately or jointly in order to carry out a right or wrong judgment of the personal authentication card.

With the conventional credit card, it is rather difficult to prevent forgery of the card either by exchanging or transferring a signature column, and also difficult to control a wrong use of the card by calculating a password.

In addition, a face image on a personal authentication card such as a member's card and an employee ID card can be made or forged easily by a printer, so that it is necessary to provide a terminal reader for reading information encoded in a non-contact type IC chip in order to carry out a right or wrong judgment. However, it cannot be guaranteed that such a right or wrong judgment by artificially visual checking is always correct.

Accordingly, the conventional personal authentication cards are very weak against forgery so that it has been necessary for a credit company to compensate by the insurance the damage caused by alteration or forgery, and also to cut a credit amount in order to keep the amount of compensated damage as low as possible.

However, exploitation of leakage of the data by an artificial mistake or hacker of a registered password of a card company cannot be compensated by the card company so that various kinds of security are examined as a problem to be concerned with trust of the card company.

In addition, it is common in the conventional personal authentication card for the face image to be outputted by sublimation heat transfer printing onto a vinyl chloride card or by entering a non-contact type IC chip into a PVC sheet.

Security for the ordinary personal authentication card has various problems. For example, it is rather easy to output and print an individual photograph of the face image of another suspicious person using a sublimation heat transfer printer. Moreover, in a case where the face image of a suspicious person is printed into the personal authentication card, which is held by the suspicious person himself, it is impossible to judge him as the suspicious person directly.

If a reader-terminal for reading a non-contact type IC chip is not provided at the point of questioning a suspicious person, it is difficult to make a right or wrong judgment that he is a suspicious person immediately. Because the work for questioning a suspicious person is divided into specialized labors, there is a limit for questioning these suspicious persons.

Generally, at present condition, where personal identity is read through a reader terminal of a non-contact type IC chip at an entrance of a given site, the memory capacity of a used non-built in type IC chip is of the order of 1 kilobyte, so the inputted information such as a personal identity, an employee number, a full name or a personal identification number is not complicated.

As described above, an individual photograph of the face image is outputted by sublimation transfer printing onto a vinyl chloride sheet and a non-contact type IC chip is put into the PVC sheet, which is used for a right or wrong judgment of the personal authentication card.

There is another card using material (excluding a PVC sheet) which is difficult to forge, but it is rather difficult to output a photograph of a face image for an individual identity so that it is necessary to make a processing, thus increasing production cost.

Most personal authentication cards are ordinarily and generally made of a PVC sheet (which may have a built-in non-contact type IC chip), onto which a face image of a person is outputted by sublimation transfer printing.

These personal authentication cards, however, have the following disadvantages. For example, it is important to avoid erroneous outputting and printing of the face of another person when the printer is used.

When these problems are settled, a card which is the same as the formal card is easily and ironically forged.

In order to solve the problems, it is easy to use a built-in non-contact type IC chip having more than 500 kilobytes, and to use a contact type IC chip together with a magnetic tape for improving security, but it has a disadvantage that it is expensive and a field of outputting and printing a face image for a personal identification card is limited.

The personal authentication card having a built-in non-contact type IC chip includes another disadvantage that an antenna is likely to be easily damaged by an outer shock in the used frequency range.

As mentioned above, there has been proposed a personal authentication card made of a material other than PVC sheet which is difficult to forge, but it is difficult to make a visual check and a print output of the face image of a bearer of the card at a low cost.

A security for leakage of the data of a credit card such as a monetary problem, entry permission of a person having an entry certificate, a premium gift and special services is in proportion to a security level of the price as well as trust of the company so that it is necessary to give another security in accordance with the condition.

A principal object of this invention is to provide a personal authentication card having a high visual checking security which comprises a set of an upper transparent card support layer and a lower transparent card support layer which are integrally put together to form a white synthetic resin sheet, into which a non-contact type IC chip and a rectangular antenna are being sandwiched at a position to locate near one end position horizontally and also at a middle position between the top and bottom of the upper and lower transparent card support layers, each layer having a given area and a thickness, a white gradating printing layer having a given thickness and the same area as that of the upper transparent card support layer, said white gradating ordinary printing layer being integrally put on the upper transparent card support layer, said white gradating ordinary printing layer having a photograph image printing portion printed by a sublime heat transcript printing at a position of the ordinary printing layer, which does not interfere with the IC chip and the antenna, an ordinary printing layer having a given thickness and the same area as the printing layer having a given thickness and the same area as the lower transparent card support layer, said ordinary printing layer having a white mat portion to locate at the photograph image printing portion, a black printing layer having a given area and a thickness, said black printing layer being provided integrally on the ordinary printing layer whereby only a printed output portion of a personal photograph of a face image of the personal authentication card is made of a transparent material, the face image is outputted by a sublime heat transcript printing, the same size image as the face image is engraved by watermarking from the back side to make the face image cloudy, and a visual checking both from the front and back sides, and a right or wrong judgment of image can be carried out correctly, easily and at a low cost.

Another object of this invention is to provide a personal authentication card having a high visual checking security which comprises a set of an upper transparent card support layer and a lower transparent card support which are integrally put together to form a white synthetic resin sheet, into which a non-contact type IC chip and a rectangular antenna are being sandwiched at a position to locate near one end position horizontally and also at a middle position between the top and bottom of the upper and lower transparent card support layers, each layer having a given area and a thickness, a white gradating printing layer having a given thickness and the same area as that of the upper transparent card support layer, said white gradating ordinary printing layer being integrally put on the upper transparent card support layer, said white gradating ordinary printing layer having a photograph image printing portion printed by a sublime heat transcript printing at a position of the ordinary printing layer, which does not interfere with the IC chip and the antenna, an ordinary printing layer having a given thickness and the same area as the printing layer having a given thickness and the same area as the lower transparent card support layer, said ordinary printing layer having a white mat portion to locate at the photograph image printing portion, a black printing layer having a given area and a thickness, said black printing layer being provided integrally on the ordinary printing layer, a woven pattern hologram gradating layer having a given area and a thickness, said woven pattern hologram gradating layer being provided integrally on the ordinary printing layer whereby only a printed output portion of a personal photograph of a face image of the personal authentication card is made of a transparent material, the face image is outputted by a sublime heat transcript printing, the same size image as the face image is engraved by an watermarking from the back side to make the face image cloudy, and a visual checking both from the front and back sides and a right or wrong judgment of image can be carried out correctly, easily and at a low cost.

Another object of this invention is to provide a personal authentication card having a high visual checking security whereby only a printed output portion of a face image of the personal authentication card is made of a transparent material, the face image is outputted by a sublime heat transcript printing, the same size image as the face image is engraved by an watermarking from the back side to make the face image cloudy, and a visual checking both from the front and backsides and a right or wrong judgment of the image can be carried out correctly, easily and without ambiguity.

Another object of this invention is to provide a personal authentication card having a high visual checking security whereby in addition to the ordinary function of the personal authentication card, a visual checking both from the front and backsides of the card can be made correctly, easily and at a low cost.

Another object of this invention is to provide a personal authentication card having a high visual checking security whereby, differently from the conventional personal authentication card, in which a personal signature has been autographed in a signature column (or name panel), no reading attenuation through wearing of the signature is caused so as to enable to set up a long life of the personal authentication card.

Another object of this invention is to provide a personal authentication card having a high visual checking security whereby in place of a personal signature, which has been autographed in a signature column (name panel), is mechanically engraved from the visualized data to make an image so that an artificial forgery of the image can be avoided in order to increase a security of the personal authentication card.

Still another object of this invention is to provide a method of manufacturing a personal authentication card having a high visual checking security, which comprises a step of making synthetic resin card, putting an IC chip and an antenna into the synthetic resin card, making only a portion for outputting and printing a photograph of a face mage transparent, outputting the photograph of the face mage by a sublime heat transcript printing, engraving a reverse image which is the same as the front face image from the back side of the transparent portion of the face image by an watermarking whereby a visual checking both from the front and back sides and a right or wrong judgment of image of a personal authentication card can be carried out correctly, easily and at a low cost.

Preferred embodiments of this invention will now be described by way of example only and with reference to the accompanying drawings in which:
FIG. 1 is a front view of an embodiment of a personal authentication card of this invention;
FIG. 2 is a schematic enlarged vertical sectional view of the personal authentication card taken on a line II-II in FIG. 1, wherein a set of an upper and lower transparent card support layers are integrally put together to sandwich an IC chip and an antenna, a gradating ordinary printing layer is integrally put on the upper transparent card support layer and a lower ordinary printing layer is integrally put on the lower transparent card support layer, and a black printing layer is integrally put on the ordinary printing layer;
FIG. 3 is a schematic enlarged vertical sectional view of another embodiment of the personal authentication card shown in FIG. 2;
FIG. 4 is a schematic enlarged vertical sectional view of another embodiment of the personal authentication card shown in FIG 2, in which a hologram layer is integrally put on the black printing layer;
FIG. 5 is a schematic enlarged vertical sectional view of another embodiment of the personal authentication card shown in FIG. 4, in which a visualized image is engraved on the black printing layer and on the hologram layer of the personal authentication card; and
FIG. 6 is a flow-chart showing a method of manufacturing a personal authentication card.

The personal authentication card is characterized in that it has a high visual checking security and in that only a printed output portion of the face image of the personal authentication card is transparent, the face image is outputted by sublimation heat transfer printing, an area the same size as the face image is engraved by watermarking from the back side of the card to make the face image cloudy, and visual checking both from the front and back sides and a right or wrong judgment of image can be carried out correctly, easily and at a low cost.

Embodiments of the personal authentication card will be explained with regard to the examples shown in the drawings.

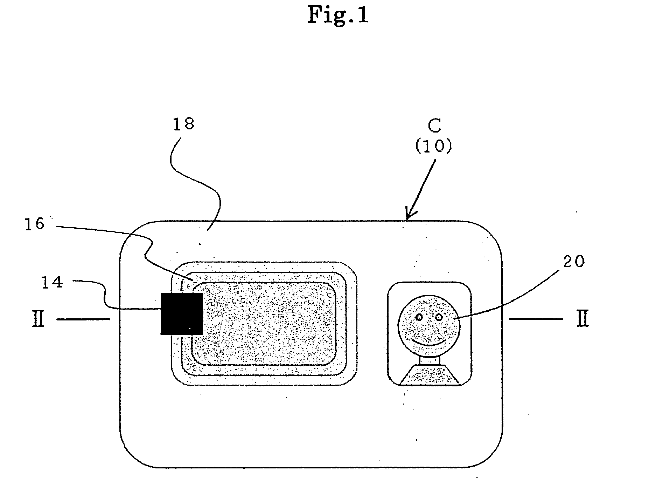

As particularly shown in FIGS. 1 to 3 and 6, a personal authentication card C comprises a set of an upper transparent card support layer 12a and a lower transparent card support layer 12b which are integrally put together to form a synthetic resin sheet 10.

A non-contact type IC chip 14 and a rectangular antenna 16 are sandwiched at a position located near one end of the card horizontally and also at a middle position between the top and bottom of the upper and lower transparent card support layers 12a and 12b.

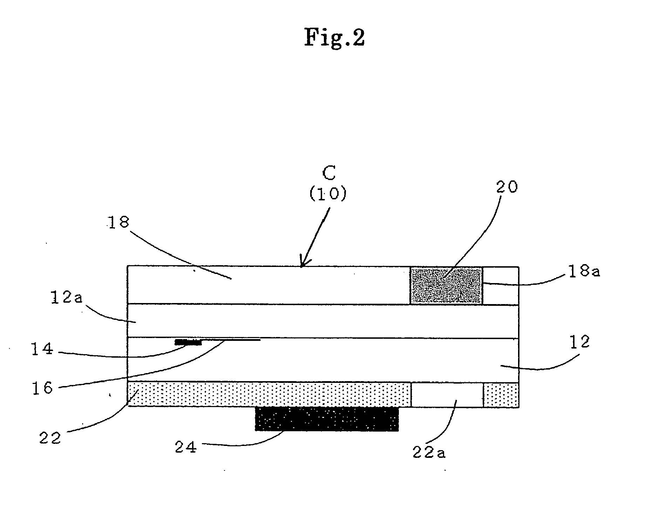

As shown in FIGS. 1 and 2, it should be noted that the rectangular antenna 16 is sandwiched between the upper and lower transparent card support layers 12a and 12b to cross the non-contact type IC chip 14 at the left portion of the rectangular antenna 16. The right portion of the antenna extends to a rightmost position which does not interfere with a face image 20 (to be explained in the following paragraph).

In a method of manufacturing a synthetic resin sheet 10, a set of an upper transparent card support layer 12a and a lower transparent card support layer 12b (each layer having an area of 54 mm x 86 mm and a thickness of 200 to 450 µm respectively) are integrally put together to sandwich a non-contact type IC chip 14 and a rectangular antenna 16 in order to form a core transparent card support layer 12.

In a step of the method of manufacturing the core transparent card support layer 12, an image printing such as letters and designs and also a printing for providing a gradation on a region other than the watermarked portion are carried out.

More particularly, a vinyl chloride sheet gradating layer 18 having a thickness of 3 to 20 µm, which includes a photograph image output area 18 having a thickness less than 3 µm, is integrally put on a region which does not interfere with the non-contact type IC chip 14 and the rectangular antenna 16 in the upper transparent card support layer 12a in order to form a transparent card support layer 12.

A personal photograph image 20 is outputted and printed in a photograph image output area 18a of the vinyl chloride sheet gradating layer 18 by sublimation heat transfer printing.

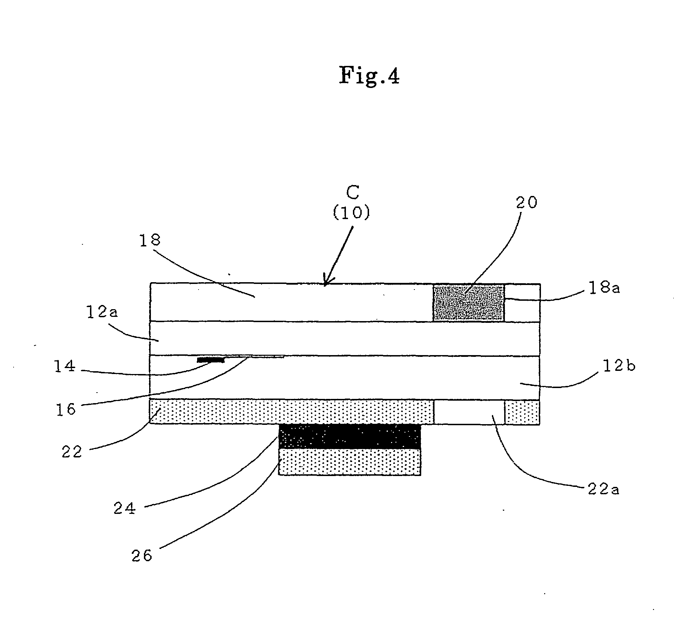

FIG. 4 is a schematic enlarged vertical sectional view of another embodiment of the personal authentication card shown in FIG. 2, wherein a given pattern hologram layer 26 (for example, a hologram foil and the like) having a thickness of 5 to 15 µm is integrally put on the black printing layer 24 (which is shown in the embodiment in FIG. 2).

As shown in FIG. 4, an ordinary printing layer 22 having a thickness of 3 to 20 µm which includes a matt layer 22a having a thickness 5 to 20 µm is integrally put on the lower transparent support layer 12b to locate the matt layer 22a having a thickness less than 3 µm at the photograph image output area 18a of the vinyl chloride sheet gradating layer 18.

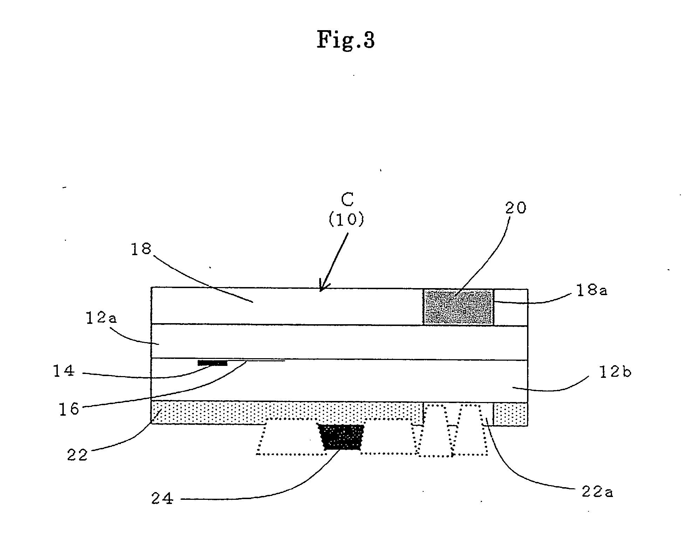

A variant embodiment of FIG. 2 is shown in FIG. 3, wherein a given personal identity signature image and a watermarked image are engraved on the ordinary printing layer 22 and the black printing layer 24.

Referring to an amendment shown in Figure 2, a black printing layer 24 having a thickness of 5 to 15 µm is integrally put on the ordinary printing layer 22 at a position which does not interfere with the matt layer 22 of the ordinary printing layer 22.

FIG. 4 is a schematic enlarged vertical sectional view of another embodiment of the personal authentication card shown in FIG. 2, wherein a given pattern hologram layer 26 (for example, a hologram foil and the like) having a thickness of 5 to 15 µm is integrally put on the black printing layer 24 which is shown in the embodiment in FIG. 3.

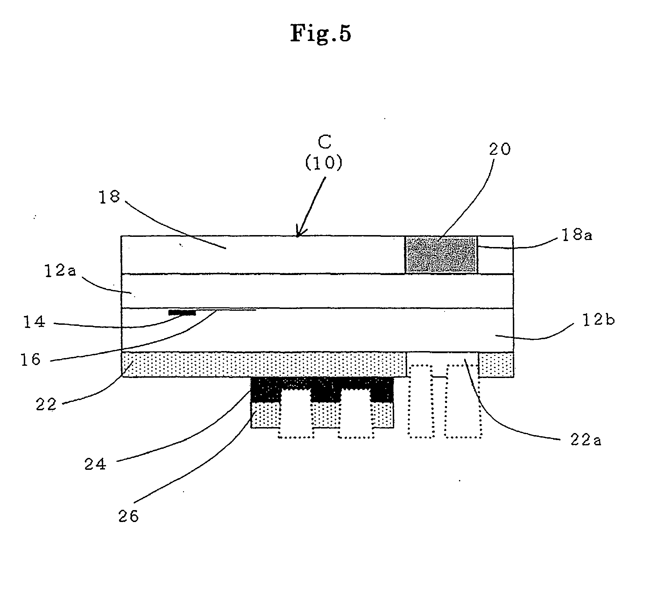

FIG. 5 is a schematic enlarged vertical sectional view of another embodiment of the personal authentication card shown in FIG. 3 wherein a given personal identity signature image and an watermarked image are engraved on the ordinary printing layer 22, the black printing layer 24, and the pattern hologram layer 26 as well.

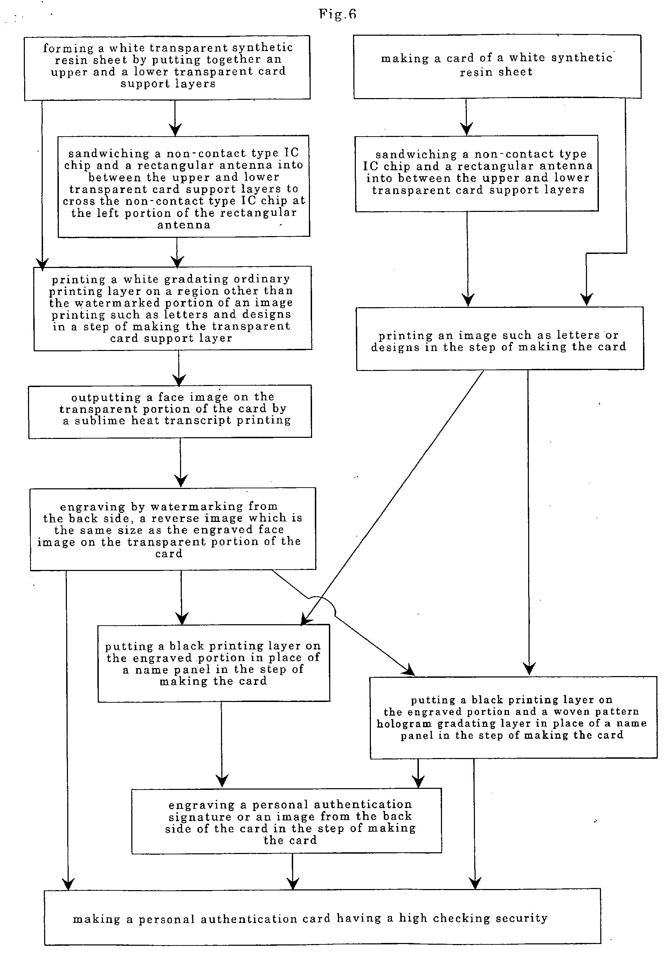

Referring to FIG. 6, a method of manufacturing a personal authentication card having a high visual checking security is shown. An upper transparent card support layer 12a and a lower transparent card support layer 12b are integrally put together to form a synthetic resin sheet 10.

As already shown in FIGS. 1 and 2, it should be noted that the rectangular antenna 16 is sandwiched between the upper and lower transparent card support layers 12a and 12b to cross the non-contact type IC chip 14 at the left portion of the rectangular antenna 16. The right portion of the antenna extends to a rightmost position which does not interfere with the IC chip 14 and the rectangular antenna 16.

In place of a personal signature, which in the past has been autographed in a signature column (name panel), a direct signature for identification in the signature column (name panel) is visualized in a step of making an image, in the same step of a watermarking from the back side or in an independent step, and the visualized data is mechanically engraved so that an artificial forgery, rewriting or recovery of the image can be avoided in order to increase a security of the personal authentication card.

The mechanically engraved signature can be discriminated clearly even if it is numerically embossed thereon so that a personal authentication card having a high visual checking security and no restriction of location for the signature column can be manufactured correctly, easily and at a low cost.

A reverse image which is the same as the front face image from the back side of the transparent portion of the face image can be engraved by a watermarking whereby a visual checking both from the front and back sides and a right or wrong judgment of image of a person can be made.

Although this invention has been fully described by way of examples with reference to the accompanying drawings, it is to be noted that various changes and modifications will be apparent to those skilled in the art. Therefore, unless otherwise such changes and modifications depart from the scope of this invention, they should be construed as being included therein.

## Claims

1. A personal authentication card (C) which comprises:
a synthetic resin sheet including a set of an upper transparent card support layer (12a) and a lower transparent card support layer (12b) which are combined to form said synthetic resin sheet, between which layers a non-contact type IC chip (14) and a rectangular antenna (16) are sandwiched at a position near one end position horizontally and also at a middle position between the top and bottom of the upper and lower transparent card support layers (12a, 12b), each layer having a given area and a thickness;
a gradating printing layer (18) having a given thickness and the same area as that of the upper transparent card support layer (12a), said gradating ordinary printing layer being put on the upper transparent card support layer (12a), said gradating printing layer having a photograph image printing portion (18a) onto which a photographic image (20) such as a face image is printed by sublimation heat transfer printing, the photograph image printing portion (18a) being positioned at a position of the ordinary printing layer (18) such that it does not interfere with the IC chip (14) and the antenna (16);
an ordinary printing layer (22) having a given thickness and the same area as the lower transparent card support layer (12b), said ordinary printing layer (22) having a matt portion located at the photograph image printing portion (18a);
and a black printing layer (24) having a given area and a thickness, said black printing layer being provided integrally on the ordinary printing layer (22);
wherein only the photographic image printing portion (18a) of the personal authentication card is transparent, the face image is outputted by sublimation heat transfer printing, an area the same size as the face image is engraved by watermarking from the back side to make the face image cloudy, and a visual checking both from the front and back sides, and a right or wrong judgment of image can be carried out.

2. A personal authentication card as claimed in claim 1, which additionally comprises:
a woven pattern hologram gradating layer having a given area and a thickness, said woven pattern hologram gradating layer being provided integrally on the ordinary printing layer.

3. A personal authentication card as claimed in claim 1 or claim 2, whereby in place of a personal signature, a signature which has been autographed in a signature column (or name panel) is mechanically engraved from visualized data to make an image so that an artificial forgery of the image can be avoided in order to increase a security of the personal authentication card.

4. A method of manufacturing a personal authentication card comprising:
a step of making a synthetic resin card by putting upper and lower transparent card support layers (12a, 12b) together, with an IC chip (14) and an antenna (16) in the synthetic resin card;
a step of making only a portion (18a) for outputting and printing a photograph of a face image (20) transparent;
a step of outputting the photograph of the face image (20) by sublimation heat transfer printing, engraving a reverse image which is the same as the front face image from the back side of the transparent portion of the face image by watermarking whereby a visual checking both from the front and back sides and a right or wrong judgment of image of a personal authentication card can be carried.

5. A method of manufacturing a personal authentication card as claimed in claim 4, which comprises:
a step of in place of a personal signature, which has been autographed in a signature column (or name panel), a direct signature for identification in the signature column (or name panel) is visualized in a step of making an image, in the same step of a watermarking from the back side or in an independent step, and the visualized data is mechanically engraved so that an artificial forgery, rewriting or recovery of the image can be avoided in order to increase a security of the personal authentication card.
